# EUROPÄISCHE PATENTANMELDUNG

(11) **EP 1 655 419 A2**
(43) Veröffentlichungstag der Anmeldung: **10.05.2006**
(21) Anmeldenummer: 05019599.9
(22) Anmeldetag: 09.09.2005
(51) Int. Cl.: E04B 1/80

(54) **Flächiges Wärmedämm-Element**

(30) Priorität: 14.09.2004 DE 102004044410
(71) Anmelder: Fraunhofer-Gesellschaft zur Förderung der angewandten Forschung e.V., 80686 München (DE)
(72) Erfinder: Hauser, Gerd, Prof. Dr.-Ing., 80805 München (DE)

(57) **Zusammenfassung**

Es wird ein flächiges Wärmedämm-Element mit einer ersten luftundurchlässigen Schicht (1) und einer zweiten luftundurchlässigen Schicht (2) und mit von den luftundurchlässigen Schichten (1, 2) begrenzten, mit einem Abstandshaltermaterial (4) gefüllten, evakuierten Kammern (3) beschrieben. Erfindungsgemäß sind eine Anzahl von evakuierten Kammern (3) in der Fläche des Wärmedämm-Elements (10) liegend vorgesehen, die voneinander durch außerhalb der Kammern (3) befindliche Stegflächen (5) beabstandet sind, an denen das flächige Wärmedämm-Element (10) ohne Verletzung der die Kammern (3) begrenzenden luftundurchlässigen Schichten (1, 2) zerteilbar ist.

## Beschreibung

Die Erfindung betrifft ein flächiges Wärmedämm-Element mit einer ersten luftundurchlässigen Schicht und einer zweiten luftundurchlässigen Schicht und mit von den luftundurchlässigen Schichten begrenzten, mit einem Abstandshaltermaterial gefüllten evakuierten Kammern. Solche flächige Wärmedämm-Elemente werden auch als Vakuum-Dämmpaneele bezeichnet.

Die Transmissionswärmeströme durch Bauteile, insbesondere durch Wände oder Decken von Bauwerken, werden üblicherweise durch Dämmstoffe gemindert, die eine geringe Wärmeleitfähigkeit besitzen, wobei die Grenzwerte im Bereich von 0,02W/(mK) liegen. Bei Vakuum-Dämmpaneelen der oben genannten Art kann die Wärmeleitfähigkeit noch um eine Zehnerpotenz gesenkt werden. Die derzeit zur Verfügung stehende Technik strebt großformatige Paneele an, um Wärmebrückenwirkungen im Randverbund zu mindern. Hierdurch entstehen starre Elemente, die bei Neubauten problemlos durch Rastermaße Einsatz finden können, sich im Gebäudebestand jedoch nur schwer anpassen lassen. Die Kosten derartiger Produkte sind relativ hoch und die Dauerhaftigkeit des Unterdrucks ist nicht belegt. Für eine im Falle von Modernisierung oder Sanierung häufig notwendige Innendämmung kommen herkömmliche Paneele der genannten Art nicht zum Einsatz, sowohl aus den genannten Gründen, wie auch aus Praktikabilitätsgründen wie dem erforderlichen Anbringen mit Dübeln oder Nagelsystemen.

Aus der DE 44 43 082 A1 ist eine Wärmedämmung für Behälter, Rohrleitungen und Apparate bekannt, bei der durch eine polymere Außenhaut flexible Beutel gebildet sind, die gegebenenfalls durch Stege voneinander getrennt sind. Die Beutel sind nicht evakuiert, um deren Flexibilität zu gewährleisten; gegebenenfalls sind sie mit einem wärmeisolierenden Schutzgas gefüllt.

Aus der EP 0 128 235 A1 ist ein durch tiefgezogene Metallplatten begrenzter evakuierter Wärmeisolator bekannt, der mit einem als Abstandhalter fungierenden Fasermaterial gefüllt ist. Der Wärmeisolator umfasst nur eine Kammer.

Schließlich ist aus der DE 198 33 566 A1 ein ebenfalls mit einem Abstandhaltermaterial gefüllter, evakuierter Wärmedämmkörper bekannt, der durch eine Metall- oder Kunststoffolie begrenzt ist. Auch dieser Wärmeisolator umfasst nur eine Kammer. An einer umlaufenden Verbindungsstelle sind die beiden Folienlagen durch ein gasdichtes Formelement voneinander thermisch entkoppelt.

Bei den üblichen Dämmstoffen entstehen in den Anschlußbereichen der Innenwände und Geschoßdecken hohe Wärmebrückenwirkungen mit im Winter tiefen raumseitigen Oberflächentemperaturen, die ein partielles Dämmen dieser Bauteile ebenfalls notwendig machen, was jedoch aufgrund der Schichtdicken konstruktiv kaum realisierbar ist. Die mit einer Innendämmung einhergehenden Flächenminderungen führen zu Mietwertminderungen bzw. zu Gebrauchsminderungen oder aber zu einer Reduzierung der gewählten Schichtdicken und damit aber zu einer Verminderung der Effizienz der Wärmedämmung.

Die Aufgabe der Erfindung ist es, ein verbessertes flächiges Wärmedämm-Element der vorausgesetzten Art zu schaffen, welches eine hohe Wärmedämmfähigkeit aufweist und über einen weiten Anwendungsbereich einsetzbar ist.

Diese Aufgabe wird durch ein flächiges Wärmedämm-Element mit den Merkmalen des Anspruchs 1 gelöst.

Vorteilhafte Ausführungsformen, Weiterbildungen und Anwendungen des erfindungsgemäßen flächigen Wärmedämm-Elements sind in den Unteransprüchen angegeben.

Durch die Erfindung wird ein flächiges Wärmedämm-Element mit einer ersten luftundurchlässigen Schicht und einer zweiten luftundurchlässigen Schicht und mit von den luftundurchlässigen Schichten begrenzten, mit einem Abstandshaltermaterial gefüllten, evakuierten Kammern geschaffen. Erfindungsgemäß sind eine Anzahl von evakuierten Kammern in der Fläche des Wärmedämm-Elements liegend vorgesehen, die voneinander durch außerhalb der Kammern befindliche Stegflächen beabstandet sind, an denen das flächige Wärmedämm-Element ohne Verletzung der die Kammern begrenzenden luftundurchlässigen Schichten zerteilbar ist.

Ein wesentlicher Vorteil des erfindungsgemäßen flächigen Wärmedämm-Elements ist es, daß durch die kleinformatige Segmentierung, die sich aus der Unterteilung der Fläche in die Anzahl von evakuierten Kammern ergibt, die Möglichkeit einer Anpassung des Wärmedämm-Elements an zu dämmende Bauteile nahezu beliebiger Abmessungen und Geometrien besteht. Ebenso wie ebene Wand- oder Deckenflächen können einbindende Bauteile partiell oder ganz mit gedämmt werden. Auch bei ungünstigen geometrischen Anordnungen ist die Minderung der Effizienz der Wärmedämmung relativ gering. Durch die Möglichkeit einer doppellagigen Anordnung lassen sich im Randverbund entstehende Verluste gering halten.

Gemäß einer bevorzugten Ausführungsform des erfindungsgemäßen flächigen Wärmedämm-Elements ist es vorgesehen, daß die Stegflächen, durch die die evakuierten Kammern beabstandet sind, durch mindestens eine der luftundurchlässigen Schichten gebildet sind.

Hierbei kann es insbesondere vorteilhafterweise vorgesehen sein, daß die Stegflächen durch die erste luftundurchlässige Schicht gebildet sind, und daß die evakuierten Kammern durch luftundurchlässige Verbindung der zweiten luftundurchlässigen Schicht mit der ersten luftundurchlässigen Schicht verschlossen sind.

Alternativ kann es vorgesehen sein, daß die Stegflächen durch die luftundurchlässig miteinander verbundenen ersten und zweiten luftundurchlässigen Schichten gebildet sind, wobei die evakuierten Kammern durch die luftundurchlässige Verbindung der ersten und zweiten luftundurchlässigen Schichten verschlossen sind. Hier werden in vorteilhafter Weise durch die beiden die evakuierten Kammern begrenzenden Schichten gleichzeitig die zwischen den Kammern befindlichen Stegflächen gebildet.

Gemäß einer anderen bevorzugten Ausführungsform der Erfindung ist es vorgesehen, daß die Stegflächen, durch die die evakuierten Kammern beabstandet sind, durch ein mit den evakuierten Kammern verbundenes flächiges Trägermaterial gebildet sind. Bei dieser Ausführungsform werden also die zwischen den evakuierten Kammern befindlichen Stegflächen durch ein extra vorgesehenes Trägermaterial gebildet. Der Vorteil hiervon ist es, daß für die luftundurchlässigen Schichten und für die Trägerschicht für den jeweiligen Zweck besonders geeignete Materialien gewählt werden können. Für die luftundurchlässigen Schichten also eines, das besonders geeignet ist, den Unterdruck in den evakuierten Kammern zu halten, für die Trägerschicht eines, das beispielsweise besonderen Anforderungen hinsichtlich der Ästhetik des Wärmedämm-Elements genügt.

Dabei kann es insbesondere vorgesehen sein, daß das flächige Trägermaterial auf die Kammern aufkaschiert ist.

Vorzugsweise ist die Rückseite der die Stegflächen bildenden Schicht im wesentlichen eben. Die Rückseite der die Stegflächen bildenden Schicht ist bei auf eine Wand- oder Deckenfläche aufgebrachtem Wärmedämm-Element die dem Raum zugewandte Seite, diese ist dann durch die im wesentlichen ebene Ausführung besonders ansehnlich.

Vorzugsweise bilden die Stegflächen ein in der Fläche des Wärmedämm-Elements liegendes rechtwinkeliges Gitter.

Gemäß bevorzugten Ausführungsformen des erfindungsgemäßen flächigen Wärmedämm-Elements ist es vorgesehen, daß die Seitenlänge der evakuierten Kammern zwischen 2 und 20 cm, vorzugsweise zwischen 5 und 10 cm beträgt.

Insbesondere kann es vorgesehen sein, daß die luftdichten Kammern im wesentlichen quadratisch sind, und daß die Stegflächen ein quadratisches Gitter mit einem Mittenabstand von 5 mal 5 cm bis 20 mal 20 cm, vorzugsweise von 10 mal 10 cm bilden. Hierdurch ergibt sich ein Raster vorgegebener, bekannter Größe, durch welches das erfindungsgemäße Wärmedämm-Element in praktikabler Weise an bestehende Bauelemente angepasst werden kann. Dies gilt insbesondere bei einem Raster mit 10 mal 10 cm.

Die Dicke der evakuierten Kammern kann bei vorteilhaften Ausführungsformen der Erfindung zwischen 1 und 10 mm, vorzugsweise zwischen 2 und 4 mm betragen. Hierbei ergibt sich eine ausreichende bis sehr gute Wärmedämmwirkung bei gleichzeitig geringem Verlust an Raumfläche bzw. -höhe.

Gemäß einer vorteilhaften Weiterbildung des erfindungsgemäßen flächigen Wärmedämm-Elements ist es vorgesehen, daß zumindest eine der luftundurchlässigen Schichten mit einer infrarotreflektierenden Beschichtung versehen ist. Die zumindest eine infrarotreflektierende Schicht ist auf der im angebrachten Zustand der Rauminnenseite zugewandten Fläche vorgesehen und trägt zu einer weiteren Verminderung des Wärmedurchgangs des erfindungsgemäßen Wärmedämm-Elements bei.

Vorzugsweise ist die infrarotreflektiernde Beschichtung an der Rückseite der die Stegflächen bildenden Schicht vorgesehen ist. Im angebrachten Zustand des erfindungsgemäßen Wärmedämm-Elements ist die infrarotreflektierende Schicht dann der Rauminnenseite zugewandt.

Gemäß einer anderen vorteilhaften Weiterbildung der Erfindung kann auf einer Seite des Wärmedämm-Elements, insbesondere auf der Rückseite der die Stegflächen bildenden Schicht, eine die Ästhetik des Wärmedämm-Elements fördernde Oberflächenschicht vorgesehen sein. Im angebrachten Zustand des erfindungsgemäßen Wärmedämm-Elements ist dann die dem Raum zugewandte Seite besonders ansehnlich.

Gemäß einer bevorzugten Ausführungsform des erfindungsgemäßen flächigen Wärmedämm-Elements sind in den Stegflächen Bohrungen oder Öffnungen zum Durchtritt von der Befestigung des flächigen Wärmedämm-Elements dienenden Befestigungsmitteln, insbesondere von Stiften, Nägeln, Dübeln oder Schrauben vorgesehen. Damit ist eine einfache und zuverlässige Befestigung des erfindungsgemäßen Wärmedämm-Elements auf beliebigen Untergründen möglich.

Das erfindungsgemäße flächige Wärmedämm-Element ist besonders von Vorteil bei der Verwendung zur Wärmedämmung von Gebäuden, insbesondere zur nachträglichen Wärmedämmung durch Aufbringen auf der Innenseite von Wand- und/oder Deckenflächen nach Art eine Tapete.

Das erfindungsgemäße Wärmedämm-Element kann wie eine Tapete geklebt oder mittels eigens dazu vorgesehenen Befestigungsmitteln entsprechend der zuletzt genannten Ausführungsform befestigt werden

Im Folgenden werden Ausführungsbeispiele des erfindungsgemäßen Wärmedämm-Elements anhand der Zeichnung erläutert.

Es zeigt:
- Figur 1: eine etwas vereinfachte Draufsicht auf ein flächiges Wärmedämm-Element gemäß einem Ausführungsbeispiel der Erfindung;
- Figur 2: eine Querschnittsansicht des flächigen Wärmedämm-Elements des in Figur 1 gezeigten Ausführungsbeispiels;
- Figur 3: vergrößerte Querschnittsansichten von drei verschiedenen Ausführungsformen(Figuren 3a), b) und c)) des erfindungsgemäßen flächigen Wärmedämm-Elements;
- Figur 4: eine vergrößerte Draufsicht auf das flächige Wärmedämm-Element gemäß einer Ausführungsform der Erfindung, bei der Löcher oder Öffnungen zum Durchtritt von Befestigungsmitteln vorgesehen sind; und
- Figur 5: nochmals vergrößerte Schnittansichten zur Darstellung des Aufbaus des flächigen Wärmedämm-Elements gemäß zwei Ausführungsbeispielen der Erfindung (Figur 5a) und b)).

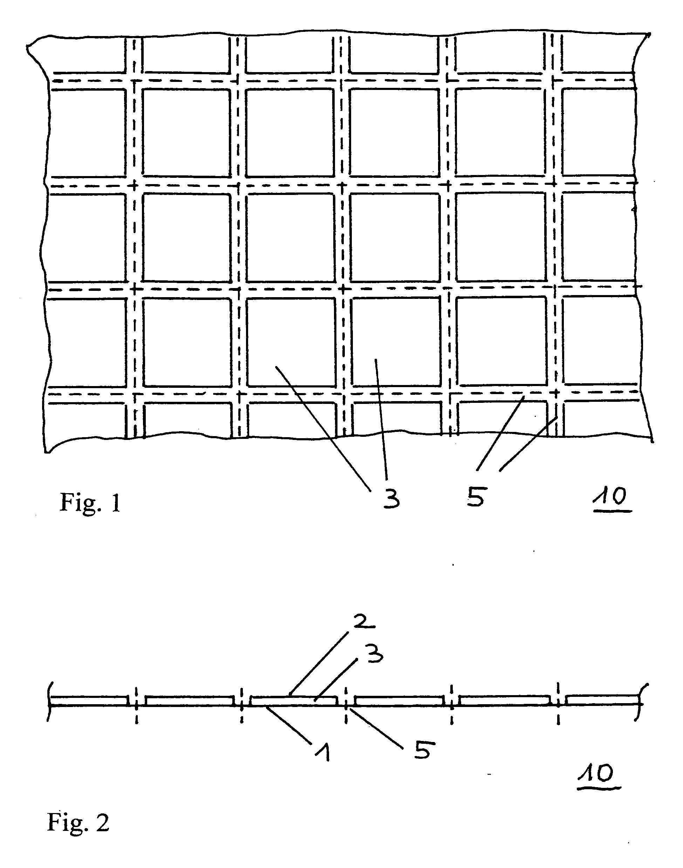

In Figur 1 und 2, in der ersteren in der Draufsicht und in der zweiteren im Querschnitt, ist ein insgesamt mit dem Bezugszeichen 10 identifiziertes flächiges Wärmedämm-Element dargestellt. Dieses enthält eine erste luftundurchlässige Schicht 1 und eine zweite luftundurchlässige Schicht 2. Von den luftundurchlässigen Schichten 1, 2 sind mit einem Abstandshaltermaterial 4 gefüllte, evakuierte Kammern 3 begrenzt. Das Abstandshaltermaterial 4 hat eine sehr geringe Wärmeleitfähigkeit, beispielsweise ist es ein pyrogenes Kieselsäure-Aerogel, welches eine hohe Festigkeit bei gleichzeitig sehr kleiner Wärmeleitfähigkeit aufgrund hoher Porosität aufweist. Es ist eine Anzahl von evakuierten Kammern 3 in der Fläche des Wärmedämm-Elements 10 liegend vorgesehen. Diese sind voneinander durch außerhalb der Kammern 3 befindliche Stegflächen 5 beabstandet. An den Stegflächen 5 ist das flächige Wärmedämm-Element 10 ohne Verletzung der die Kammern 3 begrenzenden luftundurchlässigen Schichten 1, 2 zerteilbar.

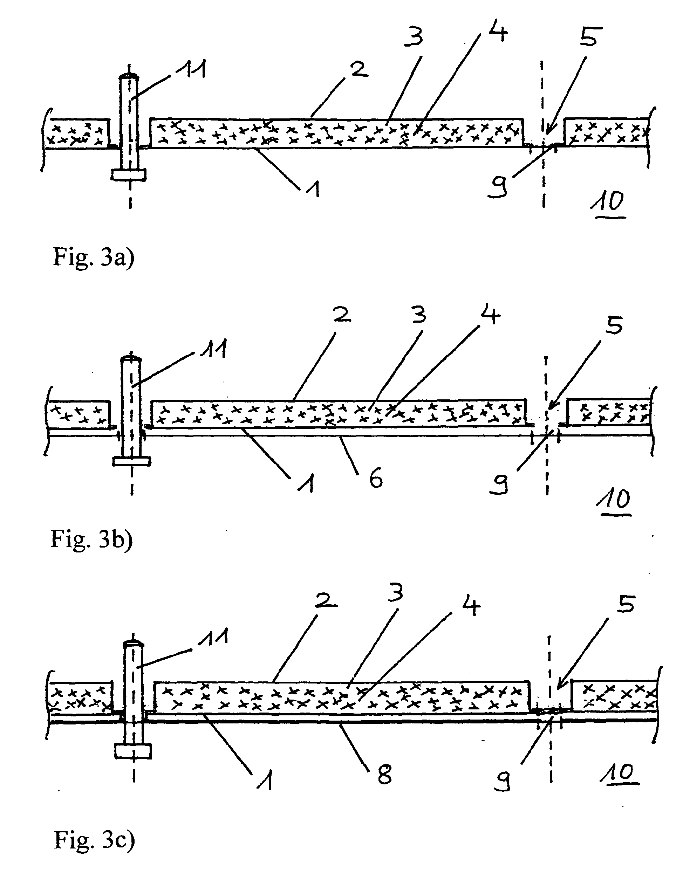

Die Stegflächen 5 können auf unterschiedliche Weise ausgebildet bzw. hergestellt sein. Drei Ausführungsbeispiele sind in den Figuren 3a) bis c) dargestellt. Gemäß einer Ausführungsform der Erfindung können die Stegflächen 5, durch die die evakuierten Kammern 3 beabstandet sind, durch mindestens eine der luftundurchlässigen Schichten 1, 2 gebildet sein:
Bei dem in Figur 3a) gezeigten Ausführungsbeispiel sind die Stegflächen 5 durch die erste luftundurchlässige Schicht 1 gebildet, und die evakuierten Kammern 3 sind durch luftundurchlässige Verbindung der zweiten luftundurchlässigen Schicht 2 mit der ersten luftundurchlässigen Schicht 1 verschlossen.
Bei dem in Figur 3c) gezeigten Ausführungsbeispiel sind die Stegflächen 5 durch die beiden luftundurchlässig miteinander verbundenen ersten und zweiten luftundurchlässigen Schichten 1, 2 gebildet, wobei die evakuierten Kammern 3 ebenfalls durch die luftundurchlässige Verbindung der ersten und zweiten luftundurchlässigen Schichten 1, 2 verschlossen sind. Zusätzlich ist bei diesem Ausführungsbeispiel auf einer Seite des Wärmedämm-Elements 10, nämlich auf der bei der späteren Anbringung des flächigen Wärmedämm-Elements 10 dem Raum zugewandten Rückseite der die Stegflächen 5 bildenden Schicht 1, eine die Ästhetik des Wärmedämm-Elements 10 fördernde Oberflächenschicht 8 vorgesehen.
Bei dem in Figur 3b) gezeigten Ausführungsbeispiel dagegen sind die Stegflächen 5, durch die die evakuierten Kammern 3 beabstandet sind, durch ein mit den evakuierten Kammern 3 verbundenes, extra vorgesehenes flächiges Trägermaterial 6 gebildet. Die evakuierten Kammern 3 sind wiederum durch eine luftundurchlässige Verbindung der ersten und zweiten luftundurchlässigen Schichten 1, 2 verschlossen. Das flächige Trägermaterial 6 ist auf die Kammern 3 aufkaschiert.

Bei allen drei in den Figuren 3a) bis c) gezeigten Ausführungsbeispielen ist die später dem Raum zugewandte Rückseite der die Stegflächen 5 bildenden Schicht 1 bzw. 6 im wesentlichen eben.

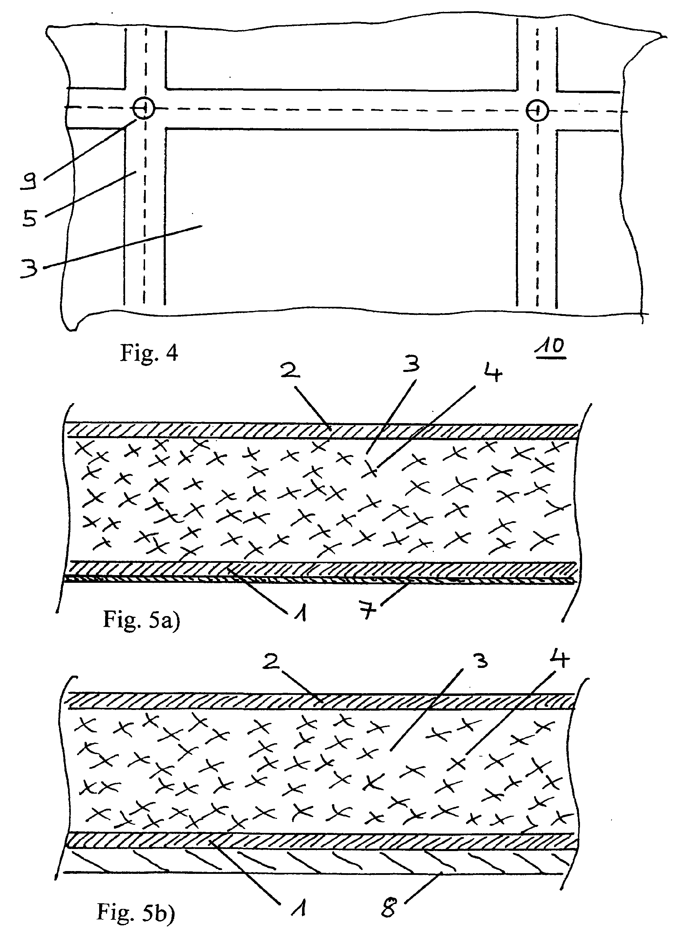

Figur 4 zeigt eine vergrößerte Draufsicht auf einen Ausschnitt der in den Figuren 3a) bis c) dargestellten Ausführungsbeispiele.

Weiterhin sind in den Stegflächen 5 Bohrungen oder Öffnungen 9 zum Durchtritt von der Befestigung des flächigen Wärmedämm-Elements 10 dienenden Befestigungsmitteln, insbesondere von Stiften, Nägeln, Dübeln oder Schrauben 11 vorgesehen. Alternatv kann des flächige Wärmedämm-Element 10 durch Kleben nach Art einer Tapete auf dem Untergrund befestigt werden.

Vorzugsweise ist das flächige Wärmedämm-Element 10 so ausgebildet, daß die Stegflächen 5 ein in der Fläche des Wärmedämm-Elements 10 liegendes rechtwinkeliges Gitter bilden. Bei bevorzugten Ausführungen beträgt die Seitenlänge der evakuierten Kammern 3 zwischen 2 und 20 cm, vorzugsweise zwischen 5 und 10 cm. Bei den beschriebenen Ausführungsbeispielen sind die luftdichten Kammern 3 im Wesentlichen quadratisch, wobei die Stegflächen 5 ein ebenfalls quadratisches Gitter mit einem Mittenabstand von 5 mal 5 cm bis 20 mal 20 cm, vorzugsweise von 10 mal 10 cm bilden. Ein quadratisches Gitter von 10 mal 10 cm ist für die Anwendung besonders praktisch.

Die Dicke der evakuierten Kammern 3 beträgt zwischen 1 und 10 mm, vorzugsweise zwischen 2 und 4 mm.

Figur 5a) und 5b) zeigt zwei nochmals vergrößerte Querschnitte durch Ausführungsbeispiele der Erfindung. Wiederum sind eine erste luftundurchlässige Schicht 1 und eine zweite luftundurchlässige Schicht 2 vorgesehen. Von den luftundurchlässigen Schichten 1, 2 sind mit einem Abstandshaltermaterial 4 gefüllte, evakuierte Kammern 3 begrenzt.

Bei dem in Figur 5a) gezeigten Ausführungsbeispiel ist die erste luftundurchlässige Schicht 1 mit einer infrarotreflektierenden Beschichtung 7 versehen. Durch eine solche sogenannte low-e-Schicht wird die Absorption der aus dem zu dämmenden Raum kommenden Infrarot-Strahlung und damit der Wärmedurchgang durch das Wärmedämm-Element 10 vermindert.

Bei dem in Figur 5b) dargestellten Ausführungsbeispiel ist auf einer Seite des Wärmedämm-Elements 10, nämlich auf der dem Raum zugewandten Rückseite der ersten Schicht 1, eine die Ästhetik des Wärmedämm-Elements 10 fördernde Oberflächenschicht 8 vorgesehen.

Das erfindungsgemäße flächige Wärmedämm-Element 10 ist mit großem Vorteil zur Wärmedämmung von Gebäuden, insbesondere zur nachträglichen Wärmedämmung durch Aufbringen auf der Innenseite von Wand- und/oder Deckenflächen nach Art einer Tapete geeignet.

### Bezugszeichenliste

- 1: erste Schicht
- 2: zweite Schicht
- 3: Kammer
- 4: Abstandshaltermaterial
- 5: Steg
- 6: flächiges Trägermaterial
- 7: IR-Beschichtung
- 8: Oberflächenschicht
- 9: Befestigungsbohrung
- 10: Wärmedämm-Element
- 11: Befestigungsmittel

## Patentansprüche

1. Wärmedämmtapete zur Wärmedämmung von Gebäuden, insbesondere zur nachträglichen Wärmedämmung durch Aufbringen auf der Innenseite von Wand- und/oder Deckenflächen, mit einer ersten Schicht (1) und einer zweiten Schicht (2) und einem zwischen den Schichten (1, 2) angeordneten isolierenden Material (3, 4), **dadurch gekennzeichnet, dass** die Schichten (1, 2) eine erste luftundurchlässige Schicht (1) und eine zweite luftundurchlässige Schicht (2) umfassen, und dass zwischen den luftundurchlässigen Schichten (1, 2) und von diesen begrenzt eine Anzahl von in der Fläche der Wärmedämmtapete (10) liegende, mit einem Abstandshaltermaterial (4) gefüllte und evakuierte Kammern (3) vorgesehen sind, die voneinander durch außerhalb der Kammern (3) befindliche Stegflächen (5) beabstandet sind, an denen die Wärmedämmtapete (10) ohne Verletzung der die Kammern (3) begrenzenden luftundurchlässigen Schichten (1, 2) zerteilbar ist.

2. Wärmedämmtapete nach Anspruch 1, **dadurch gekennzeichnet, dass** die Stegflächen (5), durch die die evakuierten Kammern (3) beabstandet sind, durch mindestens eine der luftundurchlässigen Schichten (1, 2) gebildet sind.

3. Wärmedämmtapete nach Anspruch 2, **dadurch gekennzeichnet, dass** die Stegflächen (5) durch die erste luftundurchlässige Schicht (1) gebildet sind, und dass die evakuierten Kammern (3) durch luftundurchlässige Verbindung der zweiten luftundurchlässigen Schicht (2) mit der ersten luftundurchlässigen Schicht (1) verschlossen sind.

4. Wärmedämmtapete nach Anspruch 2, **dadurch gekennzeichnet, dass** die Stegflächen (5) durch die luftundurchlässig miteinander verbundenen ersten und zweiten luftundurchlässigen Schichten (1, 2) gebildet sind, wobei die evakuierten Kammern (3) durch die luftundurchlässige Verbindung der ersten und zweiten luftundurchlässigen Schichten (1, 2) verschlossen sind.

5. Wärmedämmtapete nach Anspruch 1, **dadurch gekennzeichnet, dass** die Stegflächen (5), durch die die evakuierten Kammern (3) beabstandet sind, durch ein mit den evakuierten Kammern (3) verbundenes flächiges Trägermaterial (6) gebildet sind.

6. Wärmedämmtapete nach Anspruch 3, **dadurch gekennzeichnet, dass** das flächige Trägermaterial (6) auf die Kammern (3) aufkaschiert ist.

7. Wärmedämmtapete nach einem der Ansprüche 2 bis 6, **dadurch gekennzeichnet, dass** die Rückseite der die Stegflächen (5) bildenden Schicht (1; 6) im wesentlichen eben ist.

8. Wärmedämmtapete nach einem der Ansprüche 1 bis 7, **dadurch gekennzeichnet, dass** die Stegflächen (5) ein in der Fläche des Wärmedämm-Elements (10) liegendes rechtwinkeliges Gitter bilden.

9. Wärmedämmtapete nach einem der Ansprüche 1 bis 8, **dadurch gekennzeichnet, dass** die Seitenlänge der evakuierten Kammern (3) zwischen 2 und 20 cm, vorzugsweise zwischen 5 und 10 cm beträgt.

10. Wärmedämmtapete nach Anspruch 8 und 9, **dadurch gekennzeichnet, dass** die luftdichten Kammern (3) im wesentlichen quadratisch sind, und dass die Stegflächen (5) ein quadratisches Gitter mit einem Mittenabstand von 5 mal 5 cm bis 20 mal 20 cm, vorzugsweise von 10 mal 10 cm bilden.

11. Wärmedämmtapete nach einem der Ansprüche 1 bis 10, **dadurch gekennzeichnet, dass** die Dicke der evakuierten Kammern (3) zwischen 1 und 10 mm, vorzugsweise zwischen 2 und 4 mm beträgt.

12. Wärmedämmtapete nach einem der Ansprüche 1 bis 11, **dadurch gekennzeichnet, dass** zumindest eine der luftundurchlässigen Schichten (1, 2) mit einer infrarotreflektierenden Beschichtung (7) versehen ist

13. Wärmedämmtapete nach Anspruch 12, **dadurch gekennzeichnet, dass** die infrarotreflektiernde Beschichtung (7) an der Rückseite der die Stegflächen (5) bildenden Schicht (1; 6) vorgesehen ist.

14. Wärmedämmtapete nach einem der Ansprüche 1 bis 13, **dadurch gekennzeichnet, dass** auf einer Seite des Wärmedämm-Elements (10), insbesondere auf der Rückseite der die Stegflächen (5) bildenden Schicht (1; 6), eine die Ästhetik des Wärmedämm-Elements (10) fördernde Oberflächenschicht (8) vorgesehen ist.

15. Wärmedämmtapete nach einem der Ansprüche 1 bis 14, **dadurch gekennzeichnet, dass** in den Stegflächen (5) Bohrungen oder Öffnungen (9) zum Durchtritt von der Befestigung des flächigen Wärmedämm-Elements (10) dienenden Befestigungsmitteln, insbesondere von Stiften, Nägeln, Dübeln oder Schrauben (11) vorgesehen sind.
